Europäisches Patentamt

European Patent Office

Office européen des brevets

(11) Veröffentlichungsnummer : **0 166 737**
**B1**

(12) **EUROPÄISCHE PATENTSCHRIFT**

(45) Veröffentlichungstag der Patentschrift :
**07.09.88**

(51) Int. Cl.⁴ : **G 01 C 17/38**

(21) Anmeldenummer : **84904103.3**

(22) Anmeldetag : **14.11.84**

(86) Internationale Anmeldenummer :
**PCT/DE 84/00242**

(87) Internationale Veröffentlichungsnummer :
**WO/8502902 (04.07.85 Gazette 85/15)**

(54) VERFAHREN ZUR ERMITTLUNG VON STÖRFELDERN IN FAHRZEUGEN MIT EINEM ELEKTRONISCHEN KOMPASS.

(30) Priorität : **17.12.83 DE 3345818**

(43) Veröffentlichungstag der Anmeldung :
**08.01.86 Patentblatt 86/02**

(45) Bekanntmachung des Hinweises auf die Patenterteilung : **07.09.88 Patentblatt 88/36**

(84) Benannte Vertragsstaaten :
**DE FR SE**

(56) Entgegenhaltungen :
**EP-A- 0 041 892**
**DE-C- 1 623 577**
**US-A- 3 991 361**
**Patents Abstracts of Japan, Vol. 6, No. 92 (P-119)(970), 29 May 1982, & JP A 5728208 (Toyota) 15 February 1982**
**Patents Abstracts of Japan, Vol. 7, No. 286 (P-244) (1431), 21 December 1983, & JP A 58161818 (Alps Denki) 26 September 1983**

(73) Patentinhaber : **ROBERT BOSCH GMBH**
**Robert-Bosch-Platz 1**
**D-7016 Gerlingen-Schillerhöhe (DE)**

(72) Erfinder : **BAUER, Harald**
**Chamerstrasse 25**
**D-8500 Nürnberg (DE)**
Erfinder : **HETTICH, Gerhard**
**Holzgraben 30**
**D-8501 Rosstal (DE)**

## Beschreibung

### Stand der Technik

Die Erfindung geht aus von einem Verfahren zur Messung von Magnetfeldern in Fahrzeugen mit einem Magnetometer nach der Gattung des patentanspruchs 1 (gemäß DE-C-1 623 577).

Zur Messung von planetaren Magnetfeldern ist es bereits aus dieser DE-C-1 623 577 bekannt, Magnetometer mit einer Zeitverschlüsselung zu verwenden. Das Magnetometer enthält eine Sonde mit zwei waagrecht angeordneten, magnetisierbaren stabförmigen Kernen, die jeweils von einem Wechselfeld und der in Richtung der Stabachse liegenden Komponente des Erdfeldes durchsetzt sind. Es ist ferner bekannt, durch zwei um 90° gegeneinander verdrehte Meßspulen jeweils die X-Komponente bzw. die Y-Komponente des Erdfeldes in bezug auf die Längsachse des Fahrzeuges zu erfassen und daraus die Größe und Richtung des anliegenden Magnetfeldes zu ermitteln. Dabei besteht jedoch der Nachteil, daß sich das jeweils zu ermittelnde Erdfeld mit einem im Fahrzeug auftretenden Störfeld überlagert, wodurch die Meßgenauigkeit erheblich beeinflußt werden kann. Bei der Schiffahrt ist es bekannt, das Störfeld des Schiffes unmittelbar am Kompaß zu eliminieren, indem ein entgegengesetzt gerichtetes Feld gleicher Stärke erzeugt wird.

Aus Patents Abstracts of Japan, Band 6, Nr. 92 (P-119) (970), 29.05.82 & JP-A-5 728 208 ist es bekannt, an einem elektronischen Kompaß mit zwei um 90° gegeneinander verdrehten Sensorelementen für die Richtungsbestimmung ein Korrekturverfahren anzuwenden, um ein fahrzeugfestes Störfeld zu eliminieren. Zu diesem Zweck wird dort die Kompaßeinrichtung um 360° gedreht und dabei werden laufend die X- und Y-Meßwerte der beiden Sonden ermittelt. Aus der Vielzahl dieser Messungen werden die Maximal- und Minimalwerte auf der X- und Y-Achse der dabei gemessenen elliptischen Ortskurve durch eine entsprechend aufgebaute Elektronik ermittelt, um dann aus den jeweiligen Meßwertpaaren das arithmetische Mittel für die X- und Y-Achse als Korrekturwert für das Störfeld zu bestimmen. Eine solche Lösung erfordert jedoch eine aufwendige elektronische Schaltung, um die zwei Maximal- und zwei Minimalwerte zu erfassen und zur Berechnung des Korrekturwertes zu verarbeiten.

Ein weiteres Verfahren zur Meßwertkorrektur eines elektronischen Kompasses mit zwei um 90° gegeneinander verdrehten Sensorelementen ist aus der US-A-3 991 361 bekannt. Dort werden jeweils beim Nulldurchgang der Ortskurve auf der X- bzw. Y-Achse die dann auftretenden Y- bzw. X-Werte erfaßt und gemittelt. Durch die so ermittelten Korrekturwerte wird schließlich das ortsfeste Störfeld im Fahrzeug durch eine entsprechende Gegenkopplung ausgeblendet. Auch hierbei ist eine aufwendige Elektronik erforderlich und außerdem darf das ortfeste Störfeld nicht größer als das wirksame Erdmagnetfeld sein, weil sonst nicht mehr beide Achsen von der Ortskurve geschnitten werden.

Aus der JP-A-58 161 818 ist schließlich ein Korrekturverfahren bekannt, nach dem 16 gleichmäßig verteilte Meßpunkte der Ortskurve während der Drehung der Meßeinrichtung um 360° erfaßt und deren X- und Y-Werte in entsprechende Speicher abgelegt werden. Aus den arithmetischen Mitteln dieser 16 Punkte wird schließlich über eine elektronische Schaltung ein Korrekturfaktor für die X- und Y-Achse ermittelt und gespeichert, um danach bei Navigationsfahrten durch entsprechende Korrekturen der Meßwerte eines dann am Magnetometer gemessenen Magnetfeldes die Nordrichtung auf einem Display korrekt anzuzeigen. Auch dieses Korrekturverfahren erfordert eine Vielzahl von Meßpunkten zur Berechnung der Korrekturgröße und damit eine relativ aufwendige elektronische Schaltung.

Mit der vorliegenden, in Anspruch 1 definierten Lösung wird angestrebt, ein im Fahrzeug auftretendes Störfeld nach Größe und Richtung in möglichst einfacher Weise mit dem Kompaß zu ermitteln, so daß es als Korrekturgröße zur Messung des Erdfeldes oder zur weiteren Auswertung im elektronischen Kompaß berücksichtigt werden kann.

### Vorteile der Erfindung

Das erfindungsgemäße Verfahren mit den Merkmalen des Anspruchs 1 hat den Vorteil, daß die Größe und Richtung eines magnetischen Störfeldes im Kraftfahrzeug bereits mit zwei Messungen durch den elektronischen Kompaß zu ermitteln ist. Ein weiterer Vorteil besteht darin, daß zur Ermittlung des Störfeldes keine weiteren Meßeinrichtungen erforderlich sind. Es ist ferner auf einfache Weise möglich, in den zwei um 180° voneinander abweichenden positionen des Fahrzeuges die jeweils gemessenen Werte durch Betätigen einer Eichtaste elektronisch abzuspeichern.

Durch die im Anspruch 2 aufgeführten Maßnahmen ist eine vorteilhafte Weiterbildung und Verbesserung der im Anspruch 1 angegebenen Merkmale möglich.

### Zeichnung

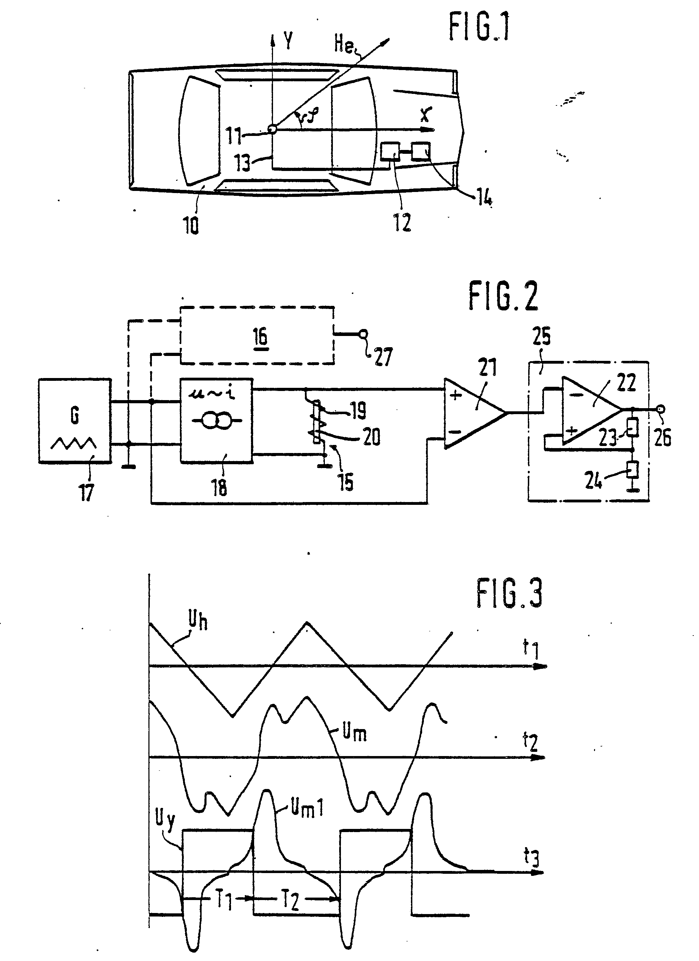

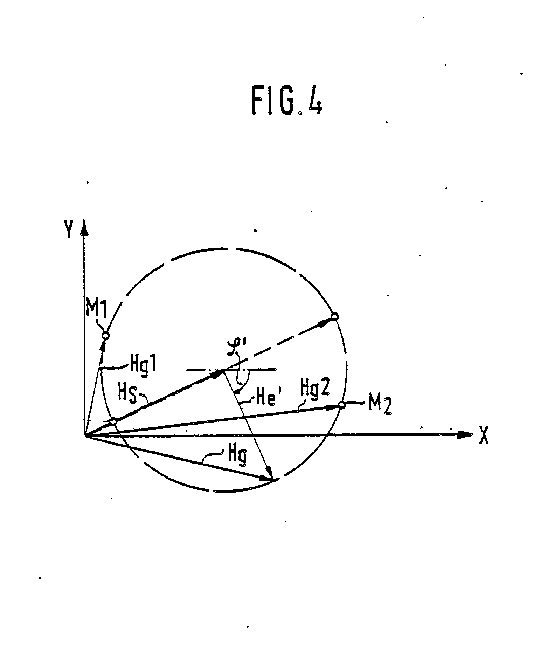

Ein Ausführungsbeispiel der Erfindung ist in der Zeichnung dargestellt und in der nachfolgenden Beschreibung näher erläutert. Es zeigt Figur 1 ein Kraftfahrzeug, bei dem durch einen elektronischen Kompaß mit einem Magnetometer die Fahrrichtung durch Messen des Erdfeldes ermittelt wird, Figur 2 zeigt die Schaltung eines Magnetometers zur Messung einer von einer Sonde erfaßten Magnetfeldkomponente, Figur 3 zeigt den Spannungsverlauf in verschiedenen Punkten der Schaltung nach Figur 2 und Figur 4 zeigt die Vektoren des Störfeldes, des Erdfeldes und des daraus zusammengesetzten, von der Sonde erfaßten Gleichfeldes bei der Eichung des Kompasses.

Beschreibung des Ausführungsbeispieles

In Figur 1 ist ein Kraftfahrzeug in der Draufsicht dargestellt und mit 10 bezeichnet. Zur Bestimmung der Fahrrichtung ist das Kraftfahrzeug 10 mit einem elektronischen Kompaß ausgerüstet, der aus einem Magnetometer 11 und einer Auswerteschaltung 12 besteht. Das Magnetometer 11 ist unter dem Dach des Kraftfahrzeuges 10 etwa in der Fahrzeugmitte oder auch unter dem Heckfenster auf der Ablage angeordnet und über ein Kabel 13 mit der im Cockpit des Fahrzeuges 10 untergebrachten Auswerteschaltung 12 verbunden. Die mit einem Rechner versehene Auswerteschaltung 12 ist an eine optische Anzeige 14 angeschlossen, die dem Fahrer die augenblickliche Fahrrichtung oder ggf. die einzuschlagende Richtung angibt, um ein zuvor eingegebenes Ziel zu erreichen. Das Magnetometer 11 dient zur Messung der Richtung des Erdfeldes in Bezug auf die Längsachse des Kraftfahrzeuges 10. Zu diesem Zweck ist das Magnetometer 11 mit zwei waagerecht angeordneten, um 90° gegeneinander versetzten Sonden ausgerüstet, von denen eine in Figur 2 dargestellt ist. Die eine der beiden Sonden liegt auf der X-Achse und damit in Richtung der Längsachse des Kraftfahrzeuges 10, während die andere Sonde quer dazu in Richtung der Y-Achse liegt. Der Vektor des Erdfeldes He bildet mit der X-Achse einen Winkel φ. Zur Ermittlung dieses Winkels werden in den beiden Sonden des Magnetometers 11 jeweils die X-Komponente bzw. die Y-Komponente des Erdfeldes He gemessen, und die entsprechenden Meßwerte werden der Auswerteschaltung 12 zugeführt, in der in an sich bekannter Weise durch den Rechner der Winkel φ berechnet sowie die Fahrrichtung bzw. die Abweichung der Fahrrichtung von der Richtung zum vorgegebenen Ziel ermittelt werden kann.

Figur 2 zeigt den Schaltungsaufbau des Magnetometers 11, wobei der Schaltungszweig mit der in Richtung der Y-Achse liegenden Sonde 15 im einzelnen dargestellt und im folgenden näher erläutert wird. Der in gleicher Weise aufgebaute Schaltungszweig für die in Richtung der X-Achse liegende Sonde ist der Einfachheit halber gestrichelt als Schaltungsblock 16 dargestellt. Beide Schaltungszweige werden von einem Dreiecksgenerator 17 versorgt, an dessen Ausgang eine in Figur 3 dargestellte Hilfswechselspannung Uh mit einer Amplitude von 500 mV und einer Frequenz von f = 1 kHz auftritt. Der Ausgang des Dreieckgenerators 17 ist mit dem Eingang einer spannungsgesteuerten Stromquelle 18 verbunden, wobei ein Anschluß auf Massepotential liegt. Der Ausgang der Stromquelle 18 ist an eine Wicklung 19 angeschlossen, die auf einem hochpermeablen, stabförmigen Kern 20 der Sonde 15 angeordnet ist. Die Wicklung 19 liegt ebenfalls mit einem Ende auf Massepotential. Das andere Ende der Wicklung 19 liegt ferner am Plus-Eingang eines Subtrahierverstärkers 21, dessen Minus-Eingang mit dem nicht auf Masse liegenden Ausgang des Dreieckgenerators 17 verbunden ist. Der Ausgang des Subtrahierverstärkers 21 ist mit dem Eingang eines Schwellwertschalters verbunden, der aus einem Schmitt-Trigger 25 mit zueinander symmetrischen Schaltschwellen besteht. Der Schmitt-Trigger wird aus einem Operationsverstärker 22 gebildet, dessen Minus-Eingang mit dem Ausgang des Subtrahierverstärkers 21 und dessen Plus-Eingang mit dem Abgriff eines Spannungsteilers aus den Widerständen 23 und 24 verbunden ist und der zwischen dem Ausgang des Operationsverstärkers 22 und dem Massepotential liegt. Der Schaltungsblock 16 enthält für die in X-Richtung liegende, nicht dargestellte Sonde ebenfalls eine spannungsgesteuerte Stromquelle 18, einen Subtrahierverstärker 21 und einen Schmitt-Trigger 25 in entsprechender Schaltung. Die Ausgänge 26 und 27 der Schaltungsanordnung sind über das Kabel 13 mit der Auswerteschaltung 12, 14 (Figur 1) zu verbinden.

Die Funktionsweise des Magnetometers 11 soll nun mit Hilfe der in Figur 3 dargestellten Spannungsverläufe näher erläutert werden. Die am Ausgang des Dreieckgenerators 17 auftretende Hilfswechselspannung Uh ist auf der Zeitachse t1 aufgetragen. Sie steuert die Stromquelle 18 in der Weise, daß in der an ihrem Ausgang angeschlossenen Wicklung 19 ein entsprechend dreieckförmig verlaufender Hilfswechselstrom auftritt, der in dem magnetisierbaren Kern 20 der Sonde 15 ein Hilfswechselfeld erzeugt. Durch dieses Hilfswechselfeld wird der Kern 20 wechselweise, d. h. in wechselnder Richtung bis in die Sättigung magnetisiert. Da der Kern 20 außerdem von der Y-Komponente des Erdfeldes He (Figur 1) durchsetzt wird, überlagern sich beide Felder im Kern 20. Die Y-Komponente des Erdfeldes He bildet dabei das mit der Sonde 15 zu messende Magnetfeld, das den Kern 20 nur in einer Richtung durchsetzt und dadurch den Kern 20 in einer Magnetisierungsrichtung früher in den Sättigungsbereich bringt, die Sättigung dagegen in der entgegengesetzten Magnetisierungsrichtung verzögert. Das zu messende Magnetfeld und das vom Wechselstrom erzeugte Hilfswechselfeld erzeugen zusammen mit der angelegten, den Magnetisierungsstrom treibenden Spannung an der Wicklung 19 eine Meßspannung Um, die in Figur 3 auf der Zeitachse t2 dargestellt ist. Durch den Subtrahierverstärker 21 wird nun die Hilfswechselspannung Uh des Dreieckgenerators 17 von der Meßspannung Um in dem Maße subtrahiert, daß am Ausgang des Subtrahierverstärkers 21 nunmehr die auf der Zeitachse t3 dargestellte verstärkte Meßspannung Um1 auftritt, die der vom gesamten Magnetfeld in der Wicklung 19 induzierten Spannung entspricht. Die positiven und negativen Halbwellen der Meßspannung Um an der Wicklung 19 bzw. der verstärkten Meßspannung Um1 am Ausgang des Subtrahierverstärkers 21 weichen in Abhängigkeit von dem zu messenden Magnetfeld voneinander ab. Die Größe der Abweichung ist dabei ein Maß für die Größe des gemessenen Magnetfeldes an der Sonde 15 und folglich ein Maß für die Y-Komponente des Erdfeldes He. Zur Erfassung dieser Abweichung zwischen der positiven und negativen Halbwellen wird die verstärkte Meßspannung Um1 am Ausgang des Subtrahierverstärkers 21 auf den Eingang des Schmitt-Triggers 25 gelegt. Die dadurch am Ausgang 26 erzeugte rechteckförmige, auf der Zeitachse t3 dargestellte Ausgangsspannung Uy wird der Auswerteschaltung 12 (Figur 1) zugeführt, wobei das Tastverhältnis der Rechteckspannung, d. h. die Zeitdauer T1 der positiven Amplitude zur Zeitdauer T2 der negativen Amplitude ein Maß für die Größe der Y-Komponente des Erdfeldes He darstellt. Das Tastverhältnis T1/(T1 + T2) wird dabei von dem Rechner, vorzugsweise ein Mikrocomputer der Auswerteschaltung 12 ermittelt und weiter verarbeitet bzw. gespeichert.

In gleicher Weise wird im Schaltungsblock 16 die X-Komponente des Erdfeldes He ermittelt und über den Ausgang 27 in Form einer pulslängenmodulierten Rechteckspannung mit einem der X-Komponente des Erdfeldes entsprechenden Tastverhältnis der Auswerteschaltung 12 (Figur 1) zugeführt. Liegt das zu ermittelnde Erdfeld genau in Fahrrichtung, also in Richtung der X-Achse oder quer dazu, also in Richtung der Y-Achse, so wird nur an einer Sonde das Magnetfeld gemessen. An der anderen Sonde ist die Magnetfeldkomponente gleich Null. Demzufolge wird an dieser Sonde eine Meßspannung mit genau gleichen positiven und negativen Halbwellen erzeugt und demzufolge wird das Tastverhältnis der ihm zugeordneten Ausgangsspannung Uy bzw. Ux gleich 50 %.

Bei der bisherigen Beschreibung des Ausführungsbeispiels wurde davon ausgegangen, daß dem Erdfeld He kein nennenswertes Störfeld überlagert ist, was gegebenenfalls für Kraftfahrzeuge mit einer Kunststoffkarosserie und wenig Eisenteilen der Fall ist. Im Regelfall ist jedoch dem Erdfeld im Kraftfahrzeug ein Störfeld überlagert, welches im wesentlichen von einem festen Magnetismus im Karosserieblech und in den sonstigen Eisenteilen des Fahrzeuges hervorgerufen wird und welches durchaus in der Größen-ordnung der Erdfeldstärke liegen kann. Um dieses Störfeld beim Betrieb des elektronischen Kompasses zu eliminieren, muß nach dem Einbau des Kompasses im Kraftfahrzeug eine Eichung vorgenommen werden. Zu diesem Zweck wird das Störfeld im Kraftfahrzeug ermittelt und die ermittelten Werte werden in einen Speicher eingeschrieben. Beim späteren Betrieb des elektronischen Kompasses werden dann die jeweils vom Magnetometer gemessenen Werte mit den gespeicherten Werten des Störfeldes korrigiert.

Mit Hilfe der Figur 4 soll nun gezeigt werden, daß vom Magnetometer 11 mit der Auswerteschaltung 12 und dem darin enthaltenen Mikrocomputer eine Störfeldmessung und Störfeldkompensation beim elektronischen Kompaß in sehr einfacher und komfortabler Weise durchgeführt werden kann. Es wird dabei das bereits in Figur 1 dargestellte Koordinatensystem verwendet, welches fest mit dem Kraftfahrzeug gekoppelt ist. Außerdem wird angenommen, daß sich das Kraftfahrzeug auf einem ebenen Platz befindet. Das von den beiden Magnetfeldsonden gemessene Gleichfeld Hg setzt sich aus der Horizontalkomponente des Erdfeldes He und der Horizontalkomponente des Störfeldes Hs im Kraftfahrzeug zusammen. Dabei ist φ' der gesuchte Winkel des Erdfeldes He' zur Fahrrichtung, d. h. zur X-Achse. Das Störfeldes Hs des Kraftfahrzeuges kann durch einen einfachen Eichvorgang genau bestinmt werden, indem zunächst in beliebiger Stellung des Kraftfahrzeuges mit einer ersten Messung M1 das vom Magnetometer 11 erfaßte gesamte Gleichfeld Hg1 gemessen wird und die gemessenen X- und Y-Werte dieses Gleichfeldes durch Betätigen einer Eichtaste in der Auswerteschaltung 12 abgespeichert werden. Dann wird das Kraftfahrzeug um genau 180° gedreht und es erfolgt eine zweite Messung M2 des gesamten Gleichfeldes Hg2. Im Bezug auf das Koordinatensystem ändert sich durch die Drehung des Kraftfahrzeuges lediglich die Richtung des Erdfeldes He, wobei das Störfeld Hs des Kraftfahrzeuges nach Größe und Richtung unverändert bleibt. Dabei ergibt sich aus den beiden gemessenen Werten Hg1 und Hg2 des Gleichfeldes das Störfeld Hs nach der Vektorgleichung

$$Hs = 1/2 \, (Hg1 + Hg2).$$

Diese Rechnung kann in einfacher Weise durch den Mikrocomputer der Auswerteschaltung 12 dadurch vorgenommen werden, daß er jeweils die X-Komponente und die Y-Komponente der gemessenen Werte M1 und M2 der Gleichfelder Hg1 und Hg2 addiert und durch zwei teilt. Auf diese Weise werden die X- und Y-Komponenten des Störfeldes Hs ermittelt und als Korrekturwerte gespeichert sowie bei allen weiteren Messungen von diesen subtrahiert.

Figur 4 zeigt ferner, daß sich durch die Drehung des Kraftfahrzeuges um eine senkrechte Achse der Vektor des Erdfeldes He um den Endpunkt des Vektors des Störfeldes Hs dreht. Der vom Erdfeldvektor beschriebene Kreis ist dabei gestrichelt dargestellt. Der Winkel φ' zwischen dem Erdfeld He und der Fahrrichtung des Kraftfahrzeuges ergibt sich somit aus der ebenfalls vom Mikrocomputer der Auswerteschaltung 12 durchzuführenden Berechnung nach der Gleichung

$$\varphi' = \arctan \frac{Hgy - Hsy}{Hgx - Hsx}$$

Dabei sind Hgy und Hsy die Y-Komponenten des Gleichfeldes Hg und des Störfeldes Hs sowie Hgx und Hsx die X-Komponenten dieser Meßwerte.

Die Messung der X- und Y-Komponenten des Gleichfeldes durch den elektronischen Kompass kann ein einfacher Weise auch dadurch realisiert werden, daß die beiden um 90° gegeneinander verdrehten Sonden des Magnetometers 11 alternierend mit einer spannungsgesteuerten Stromquelle 18 und einem Subtrahierverstärker 21 mit nachgeschaltetem Schmitt-Trigger 25 gekoppelt werden. Mit entsprechenden Zeittakt müssen dann die über eine Meßleitung gehenden Meßwerte in der Auswerteschaltung 12 wieder ausgesiebt werden.

**Patentansprüche**

1. Verfahren zur Ermittlung von Störfeldern in Fahrzeugen, die mit einem elektronischen Kompaß ausgerüstet sind, der ein im Fahrzeug (10) fest angeordnetes Magnetometer (11) mit Zeitverschlüsselung aufweist, bestehend aus zwei Sonden (15) mit jeweils einem waagrecht angeordneten, magnetisierbaren stabförmigen Kern (20), wobei die Kerne um 90° gegeneinander verdreht sind und jeweils mindestens eine Wicklung (19) zur Erzeugung je eines Hilfswechselfeldes tragen, durch das jeder Kern (20) wechselweise bis in die Sättigung magnetisiert wird und das zusammen mit einem aus dem Erdmagnetfeld He und einem Störfeld Hs des Fahrzeuges gebildeten Gleichfeld He eine Meßspannung (Um) erzeugt, deren unterschiedliches Tastverhältnis der positiven und negativen Halbwellen zur Bestimmung der Größe und Richtung des Gleichfeldes Hg in bezug auf die Längsachse (X) des Fahrzeuges (10) ausgewertet wird, dadurch gekennzeichnet, daß das Fahrzeug (10) von einer beliebigen Ausgangsposition aus beginnend, 180° um eine senkrechte Achse gedreht wird, daß dabei in den beiden um 180° voneinander abweichenden Positionen des Fahrzeuges (10) das Gleichfeld Hg1, Hg2 nach Größe und Richtung ermittelt wird und daß aus den ermittelten Werten Hg1, Hg2 das Störfeld Hs nach der Vektorgleichung Hs = 1/2 [Hg1 + Hg2] nach Größe und Richtung ermittelt wird.

2. Verfahren nach Anspruch 1, dadurch gekennzeichnet, daß die ermittelten Werte des Störfeldes Hs des Kraftfahrzeuges (10) als Korrekturgröße in einem Speicher einer Auswerteschaltung (12) abgelegt werden und daß zur Ermittlung der Fahrrichtung des Fahrzeuges (10) das Störfeld Hs nach Größe und Richtung vom jeweils gemessenen Gleichfeld Hg subtrahiert wird.

**Claims**

1. Process for determining the interference fields in vehicles having an electronic compass, which has fixed in the vehicle (10) a magnetometer (11) with time encryption, consisting of two probes (15), each with a horizontally arranged, magnetizable stick-shaped core (20), the cores being turned at 90° to each other and each carrying at least one winding (19) for the generation of an auxiliary alternating field each, by which each core (20) is magnetized alternatingly up to saturation and which, together with a continuous field Hg formed from the earth magnetic field He and an interference field Hs of the vehicle, generates a measurement voltage (Um), whose differing pulse duty factor of the positive and negative half-waves is evaluated to determine the intensity and direction of the continuous field Hg in relation to the longitudinal axis (X) of the vehicle (10), characterized in that the vehicle (10) is turned, starting from, any initial position, 180° about a vertical axis, in that, in the two positions of the vehicle (10) deviating from each other by 180°, the continuous field Hg1, Hg2 is determined in terms of intensity and direction and in that, from the Hg1, Hg2 values determined, the interference field Hs is determined in terms of intensity and direction through the vectorial equation Hs = 1/2 [Hg1 + Hg2].

2. Process according to Claim 1, characterized in that the values determined for the interference field Hs of the motor vehicle (10) are stored as a correcting quantity in a memory of an evaluation circuit (12) and in that, to determine the travelling direction of the vehicle (10), the interference field Hs is subtracted in terms of intensity and direction from the respectively measured continuous field Hg.

**Revendications**

1. Procédé pour déterminer les champs magnétiques parasites dans des véhicules équipés d'une boussole électronique comprenant un magnétomètre (11) solidaire du véhicule avec codage de temps, comprenant deux sondes (15) ayant respectivement un noyau (20) en forme de barreau magnétique, disposé horizontalement, les noyaux faisant entre eux un angle de 90° et portant chaque fois au moins un enroulement (19) pour générer un champ magnétique alternatif auxiliaire, chaque noyau (20) étant aimanté alternativement jusqu'à la saturation et le champ continu He qui se compose du champ magnétique terrestre He et d'un champ parasite Hs donnant une tension de mesure (Um) dont le rapport de travail différent entre les demi-ondes positives et négatives est utilisé pour déterminer l'amplitude et la direction du champ magnétique continu Hg par rapport à l'axe longitudinal (X) du véhicule (10), procédé caractérisé en ce que partant d'une position de départ quelconque, on fait tourner le véhicule (10) de 180° autour d'un axe vertical et on détermine pour les deux positions du véhicule (10), tournées de 180° l'une par rapport à l'autre, le champ continu Hg1, Hg2 en amplitude et en direction et à partir des grandeurs Hg1, Hg2 ainsi obtenues, on détermine le champ parasite Hs suivant l'équation vectorielle Hs = 1/2 [Hg1 + Hg2] en amplitude et en direction.

2. Procédé selon la revendication 1, caractérisé en ce que les grandeurs obtenues du champ parasite Hs du véhicule (10) sont inscrites comme grandeurs de correction dans une mémoire du circuit d'exploitation (12) et en ce que pour déterminer la direction de déplacement du véhicule (10), on retranche le champ parasite Hs en amplitude et en direction du champ continu Hg respectivement mesuré.

# 0 166 737

FIG.1

FIG.2

FIG.3

1

# FIG.4